# EUROPEAN PATENT APPLICATION

(11) **EP 1 079 243 A1**
(43) Date of publication of application: **28.02.2001**
(21) Application number: 99202720.1
(22) Date of filing: 23.08.1999
(51) Int. Cl.: G01S 15/93, B60Q 1/52

(54) **Anticollision vehicular ultrasonic ranging device**

(71) Applicant: Tung Thih Enterprise Co. Ltd., Luchu Hsiang, Taoyuan Hsien (TW)
(72) Inventor: Chen, Shin-Chung, Taoyuan Hsien (TW); Chen, Sen-Jung, Taoyuan Hsien (TW)
(74) Representative: Hooiveld, Arjen Jan Winfried

(57) **Abstract**

An anticollision vehicular ultrasonic ranging device includes three transponders L, M, R disposed at the rear end of a vehicle (100), and two transponders FR, FL disposed at the front end, a controller (10) to control the transponders and a display to indicate the sensed results of the transponders L, M, R, FL, FR. The anticollision vehicular ultrasonic ranging device can detect and inform the driver of relative distances and relative orientations between the vehicle (100) and an obstacle in front and between the vehicle (100) and an obstacle behind.

## Description

### Field of the Invention

The present invention generally relates to an anticollision vehicular ultrasonic ranging device. More particular, the present invention relates to an anticollision vehicular ultrasonic ranging device, which can simultaneously detect relative distances and relative orientations between obstacles in front of or behind the vehicle and a stationary vehicle so as to avoid collision when a user is parking the vehicle.

### Description of Related Art

Vehicles are provided with sideview mirrors to assist the driver to observe the distance between an obstacle behind the vehicle and the rear end of the vehicle when the driver is backing the vehicle. However, the actual distance is difficult to determine because of the curvature and angles of the sideview mirrors. To deal with this problem, a conventional ultrasonic ranging device for use in backing a vehicle is commercially available. The conventional ultrasonic ranging device comprises a controller and two transponders at the rear end of the vehicle. The transponders transmit radio waves and receive the reflected waves to measure the distance between the rear end of the vehicle and an obstacle. The conventional ultrasonic ranging device utilizes a buzzer to generate audible alarms with various frequencies to notify the driver as the relative distance varies. However, the conventional ultrasonic ranging device cannot measure relative orientation between the vehicle and the obstacle. Therefore, it is not possible to effectively avoid collision when the driver is backing the vehicle.

US Patent Application No.09/104,742 "Ultrasonic ranging Device with a Third Wave Sensor for Use in Backing a Vehicle", filed by the same applicant of the present invention, discloses an improved ultrasonic ranging device for a vehicle. The ultrasonic ranging device disclosed in '742 comprises a third transponder in addition to the two transponders mentioned above. The beams of the three transponders are partially overlap each other. The ultrasonic ranging device disclosed in '742 further comprises a display to show the position of the obstacle. Such a ultrasonic ranging device can provide sufficient information about the obstacle behind the vehicle to the driver so as to avoid collision.

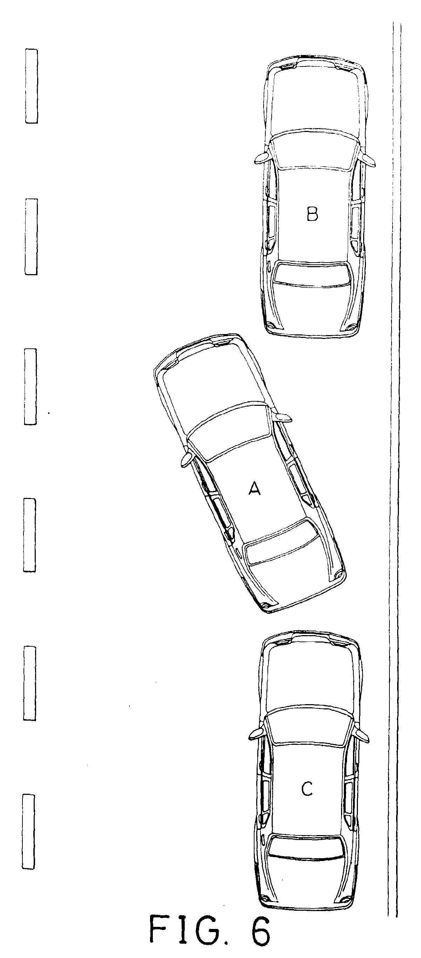

However, when a driver attempts to park a vehicle, a collision may occur with not only the obstacle behind the vehicle but also with an obstacle in front. Fig. 6 shows a situation where a vehicle A is backed into a position between vehicles B and C. For vehicle A, vehicle C is the rear obstacle, while the vehicle B is the front obstacle. During the process of parking vehicle A, a collision may occur between vehicle A and either vehicle B or C.

If vehicle A is equipped with the ultrasonic ranging device disclosed in '742, vehicle A is provided with three transponders at the rear end to detect the relative distance and relative orientation between vehicle A and C. Accordingly, the driver of vehicle A can take the information obtained from the ultrasonic ranging device into consideration, so as to avoid a collision with the vehicle C. Although the driver can observe the front through the front window, the rear bumper of vehicle B may be below than the driver's line of sight so that the driver cannot see it. Therefore, a collision may occur between vehicle A and B.

Accordingly, there is a need for a ultrasonic ranging device, which can detect obstacles both in front of and behind a vehicle. The present invention meets the need.

One object of the present invention is to provide an anticollision vehicular ultrasonic ranging device, which detects and informs the driver of relative distances and relative orientations between a vehicle and an obstacle in front of or behind the vehicle.

In accordance with one aspect of the present invention, the anticollision vehicular ultrasonic ranging device comprises three transponders disposed at a rear end of a vehicle, and two transponders disposed at a front end thereof, a controller to control the respective transponders and a display to indicate the sensed results of the respective transponders.

In accordance with another aspect of the present invention, the controller of the anticollision ultrasonic ranging device has a speed sensing circuit, which is connected to detect the speed of the vehicle and disable the transponders disposed at the front end of the vehicle when the speed exceeds a predetermined value.

Other objects, advantages and novel features of the invention will become more apparent from the following detailed description when taken in conjunction with the accompanying drawings.

### IN THE DRAWINGS:

Fig. 1 schematically shows the arrangement of the respective transponders of an anticollision vehicular ultrasonic ranging device in accordance with the present invention;
Fig. 2 shows the structure of the anticollision vehicular ultrasonic ranging device in accordance with the present invention;
Figs. 3 and 4A-4E are circuit diagrams of the anticollision vehicular ultrasonic ranging device in accordance with the present invention;
Fig. 5 shows a situation where a vehicle using the anticollision vehicular ultrasonic ranging device in accordance with the present invention is parking; and
Fig. 6 shows a situation where a vehicle is parking.

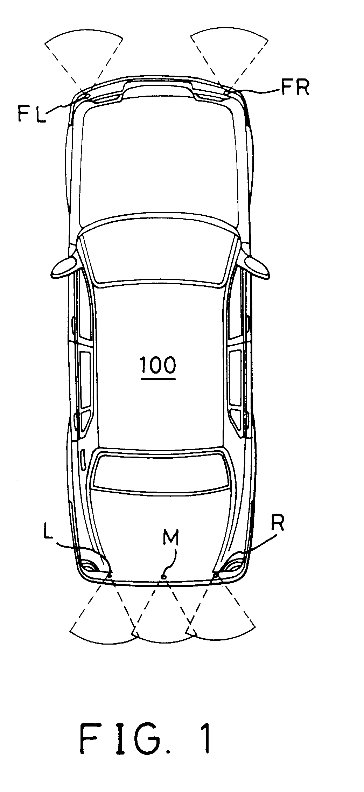

With reference to Fig. 1, an anticollision vehicular ultrasonic ranging device in accordance an embodiment of the present invention comprises three transponders L, M, R disposed at the rear end of a vehicle (100) and two transponders FR, FL disposed at the front end of the vehicle (100). Transponder L is disposed at the left corner of the rear end of the vehicle (100), transponder R is disposed at the right corner thereof, and transponder M is disposed between transponders L and R. In this embodiment, the distance between transponders L and M is equal to that between transponders M and R. Further, transponder FR is disposed at the right comer of the front end of the vehicle (100), and transponder FL is disposed at the left comer of the front end of the vehicle (100).

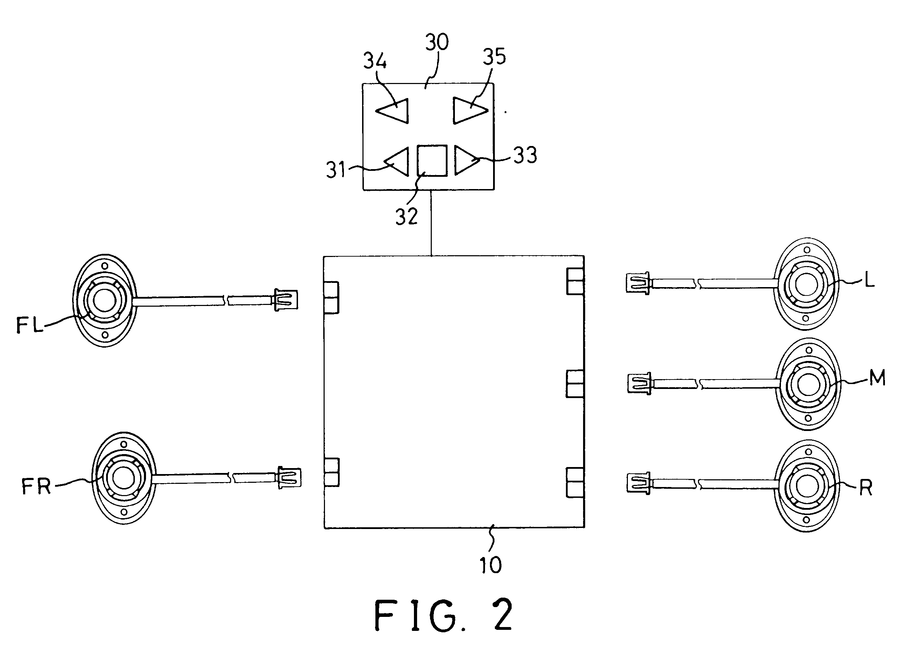

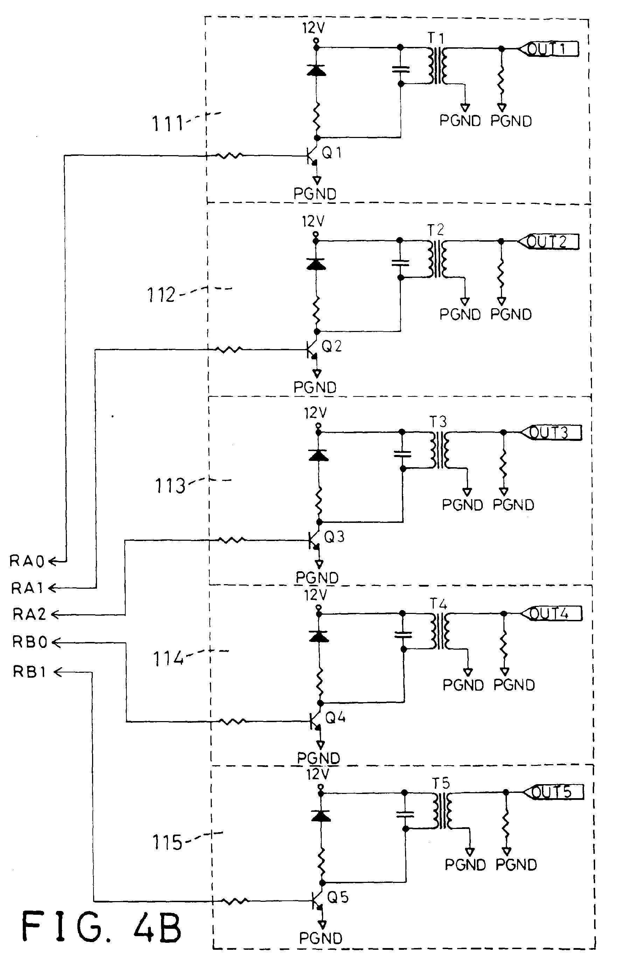

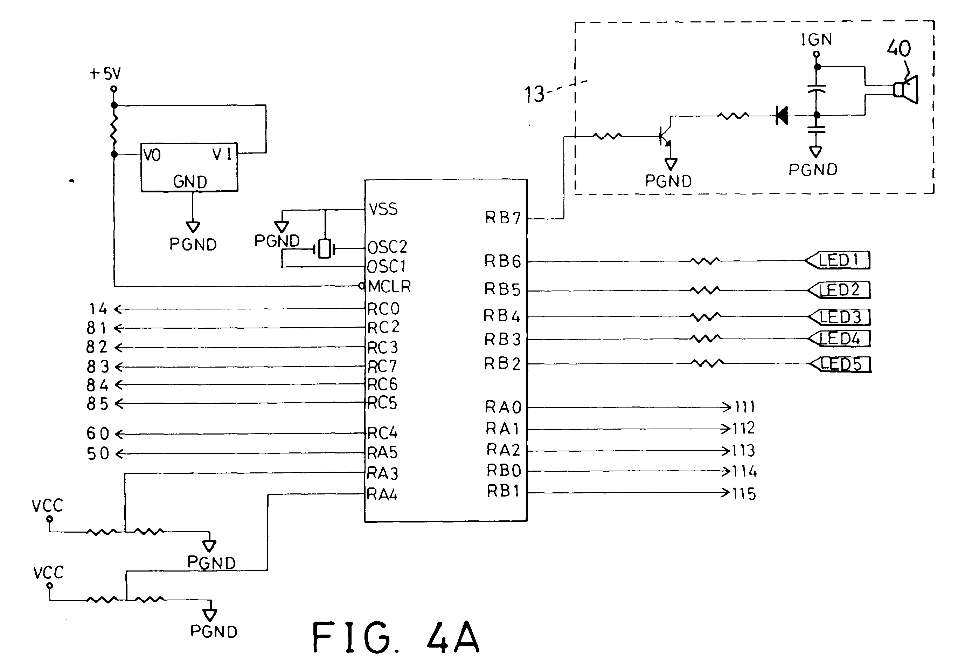

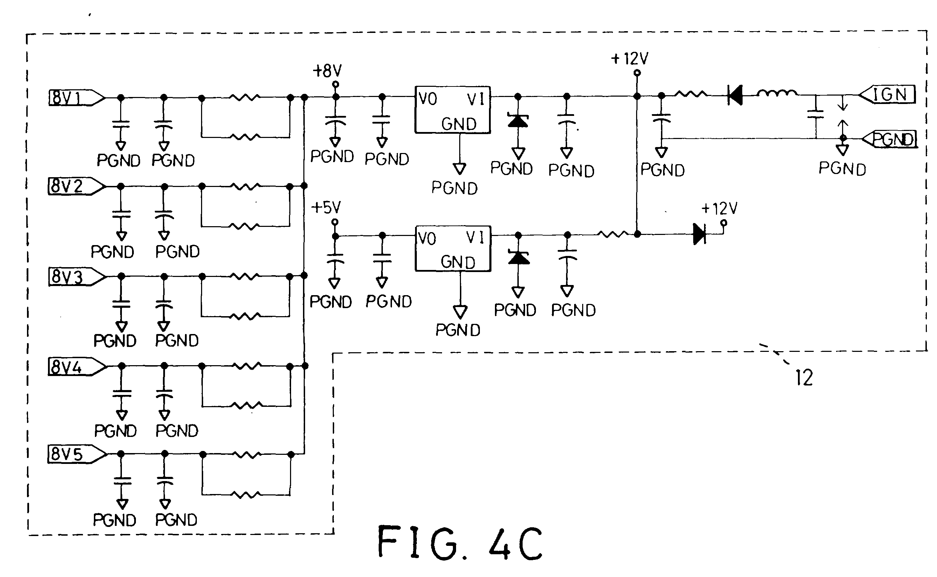

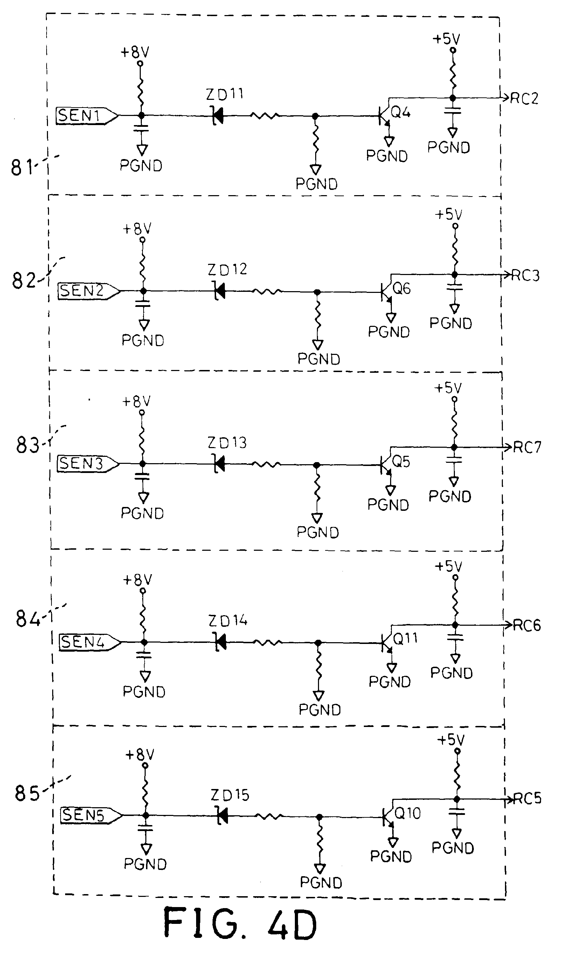

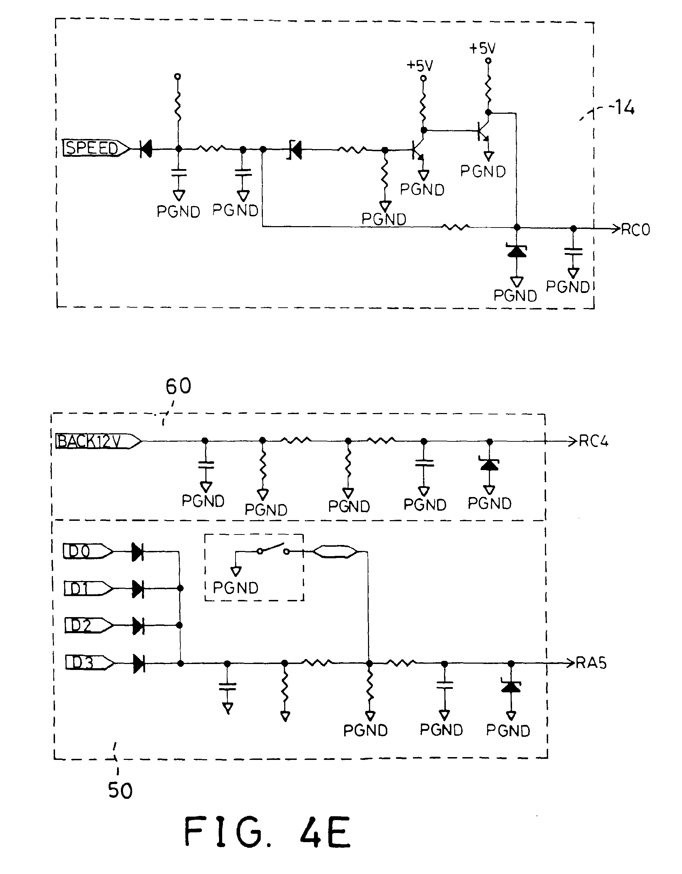

With reference to Figs. 2, 3 and 4A-4E, the anticollision vehicular ultrasonic ranging device further comprises a controller (10), a display (30) connected with the controller (10) and a buzzer (40) also connected with the controller (10).

Since the transponders are identical to each other, only one will be described in detail. Each of the transponders comprises a signal transmitting circuit (15) and a signal receiving circuit (16). An input terminal of the signal transmitting circuit (15) of each transponder L, M, R, FR, FL is connected to one of the output terminals OUT1∼OUT5 of the controller (10) so as to transmit a ultrasonic signal generated from the controller (10). The signal receiving circuit (16) receives a signal reflected from an obstacle and amplifies the reflected signal. The amplified reflected signal is then sent to the controller (10) through an output terminal SEN of the signal receiving circuit (16).

The display comprises a rear-left indicator (31), a rear-middle indicator (32), a rear-right indicator (33), a front-left indicator (34) and a front-right indicator (35). The indicators are controlled by the controller (10) to be selectively turned on or off to indicate the orientation of the obstacle. In addition, each of the indicators is controlled by the controller (10) to flash with different frequencies to provide a visual indication of the relative distance between the vehicle (100) and the obstacle.

The buzzer (40) is controlled by the controller (10) to generate sounds with various frequencies to provide an audible indication of the relative distance between the vehicle (100) and the obstacle.

The controller (10) comprises a microprocessor (11) and a power supply circuit (12). The microprocessor (11) has output terminals RB7, RB6, RB5, RB4, RB3 and RB2 connected to the indicators (31∼35) of the display (30), respectively. In this manner, the indicator (31) indicates the sensing state of transponder L, the indicator (32) indicates the sensing state of transponder M, the indicator (33) indicates the sensing state of transponder R, the indicator (34) indicates the sensing state of indicator FL, and the indicator (35) indicates the sensing state of transponder FR.

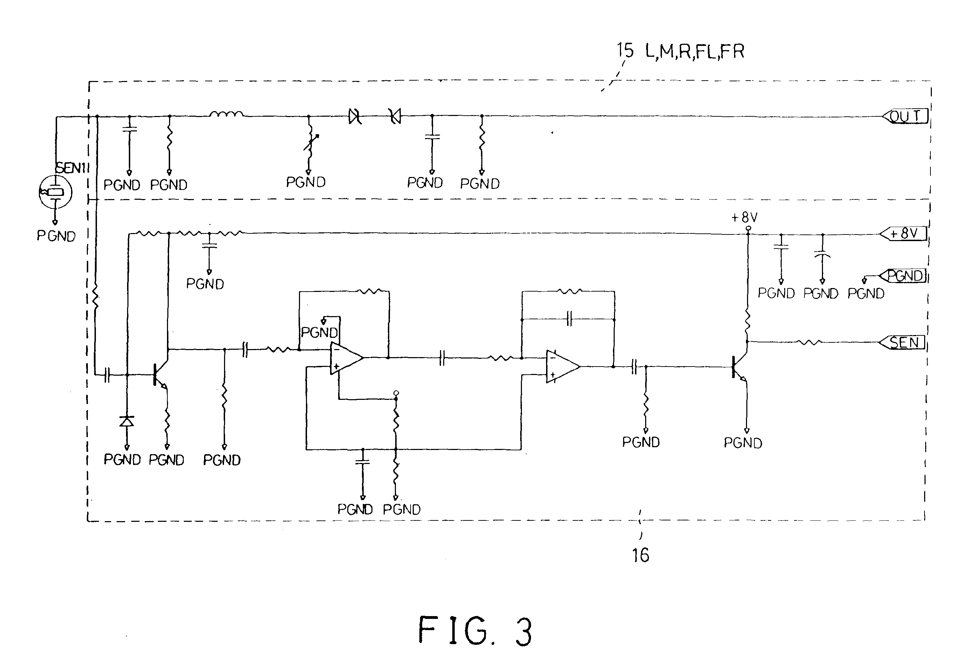

Each of the output terminals RA0, RA1, RA2, RB0, RB1 of the microprocessor (11) is provided with an electronic switch circuit (111∼115). Each of the electronic switch circuits (111∼115) comprises a transistor (Q1, Q2, Q3, Q8, Q9) and a transformer (T1, T2, T3, T4, T5). The secondary coils of the transformers (T1, T2, T3, T4, T5) serve as ultrasonic signal output terminals (OUT1∼OUT5), each of which is connected to the signal transmitting circuit (15) (Fig. 3) of each transponder to transmit a ultrasonic signal.

Furthermore, an output terminal RB7 of the microprocessor (11) is connected to the buzzer (40) through an amplifying circuit (13).

Another output terminal RC0 of the microprocessor (11) is provided with a speed sensing circuit (14), which is connected to the engine (not shown) or the tachometer (not shown) on the dashboard of the vehicle (100) to detect the speed of the vehicle (100). The speed sensing circuit (14) disables transponders FL and FR when the speed exceeds a predetermined value, for example, 10 km/hr. Accordingly, transponders FL and FR operate only when the vehicle (100) is driven at a low speed, for example, when the vehicle (100) is being parked.

An output terminal RA5 of the microprocessor (11) is provided with a forward detecting circuit (50), while an output terminal RC4 is provided with a reverse detecting circuit (60). The forward detecting circuit (50) and the reverse detecting circuit (60) are used to determine if the transmission (not shown) of the vehicle (100) is set to forward or reverse mode by sensing the position of the transmission lever. When the transmission lever is set to the reverse position, all of the transponders L, M, R, FR and FL are activated.

Input terminals RC2, RC3, RC7, RC6, RC5 of the microprocessor (11) are connected to individual signal input circuits (81∼85). Each of the signal input circuits (81∼85) comprises a transistor (Q4, Q6, Q5, Q11, Q10) and a zener diode (ZD11, ZD12, ZD13, ZD14, ZD15). Each of the signal input circuits (81∼85) is connected to a signal receiving circuit (16) (Fig. 3) of the corresponding transponder, so as to input the reflected signal received by the signal receiving circuit (16) to the microprocessor (11).

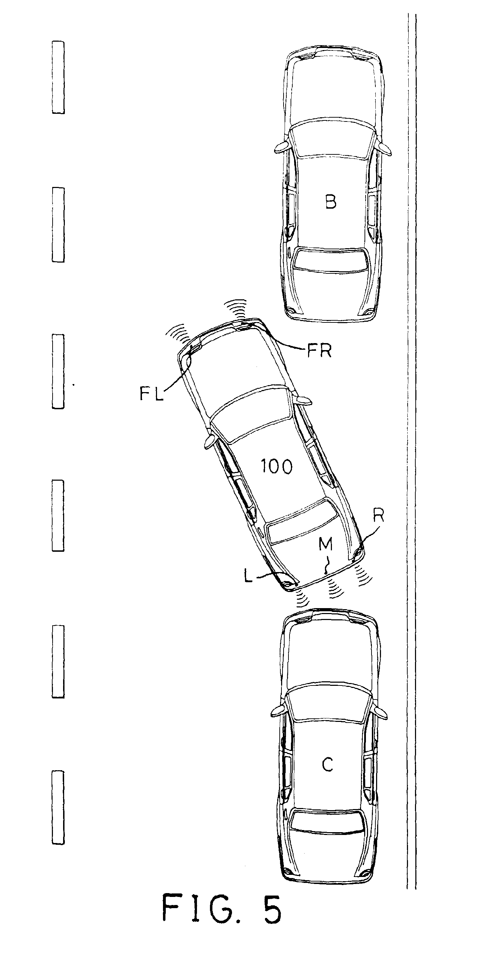

As shown in Fig. 5, the vehicle (100) is parking in a position between two other vehicles B and C. Transponders L, M, and R transmit ultrasonic signals and receive the ultrasonic signals reflected from vehicle C. Transponders FL and FR transmit ultrasonic signals and receive the ultrasonic signals reflected from vehicle B.

The sensing beam of transponder L partially overlaps that of transponder M, and the sensing beam of transponder R also partially overlaps that of transponder M. If a signal is reflected in an overlapped sensing region between transponders L and M, for example, then the reflected signal is received by both of the adjacent transponders L and M. As a result, the indicators 31 and 32 of the display (30) are turned on, and flash with different frequencies to indicate the distance between the vehicle (100) and the vehicle C. In this embodiment, each of the indicators (31∼35) of the display (30) has four modes: ON (without flashing), flashing 8 times per second, flashing four times per second, and OFF. In addition, the buzzer (40) also generates an audible alarm with different frequencies to indicate the relative distance between the vehicle (100) and the obstacle.

Although the invention has been explained in relation to its preferred embodiment, it is to be understood that many other possible modifications and variations can be made without departing from the spirit and scope of the invention as hereinafter claimed.

## Claims

1. An anticollision vehicular ultrasonic ranging device comprising:
a number of transponders, with multiple transponders disposed at the rear end of a vehicle and multiple transponders disposed at the front end of the vehicle, each of the transponders transmitting signals and receiving signals reflected by an obstacle;
a controller connected to said transponders to control the respective transponders; and
a display connected to the controller to indicate the sensed results of the respective transponders.

2. The anticollision vehicular ultrasonic ranging device as claimed in claim 1, wherein said controller generates ultrasonic signals for the respective transponders to transmit.

3. The anticollision vehicular ultrasonic ranging device as claimed in claim 2, wherein each of the transponders has a signal transmitting circuit connected to the controller to receive the ultrasonic signal generated by the controller and to transmit the same outward, and a signal receiving circuit to receive the signal reflected from an obstacle and feed back the same to the controller.

4. The anticollision vehicular ultrasonic ranging device as claimed in claim 1, wherein said controller has a speed sensing circuit, which is connected to detect the speed of the vehicle and disable the transponders disposed at the front end of the vehicle when the speed exceeds a predetermined value.

5. The anticollision vehicular ultrasonic ranging device as claimed in claim 1, wherein said display has multiple indicators, the number of the indicators is equal to the total number of the of transponders, and each of the indicators indicates the sensed result of the corresponding transponder.

6. The anticollision vehicular ultrasonic ranging device as claimed in claim 5, wherein each of the indicators is either ON, OFF or flashes with various frequencies to indicate the relative distance between the corresponding transponder and the obstacle.
